# EUROPEAN PATENT APPLICATION

(11) **EP 3 705 638 A1**
(43) Date of publication of application: **09.09.2020**
(21) Application number: 19380004.2
(22) Date of filing: 08.03.2019
(51) Int. Cl.: E03C 1/04, E03C 1/05

(54) **SMART MONOCONTROL CARTRIDGE FOR TAPS**

(71) Applicant: Piher Sensors & Controls, S.A., 31500 Navarra (ES)
(72) Inventor: BUENO PALACIOS, Cesar, 31500 Navarra (ES); FORNIES GARCIA, Carlos, 31500 Navarra (ES); VANNESTE, Bram, 31500 Navarra (ES)
(74) Representative: Durán-Corretjer, S.L.P.

(57) **Abstract**

Smart monocontrol cartridge (1) for taps comprising:
a casing (4) which houses therein:
a channel for a fluid,
a mobile body (5) which comprises a cavity in which a mobile cam (8) is located,
the mobile cam (8) being coupled by rotatable means to the mobile body by means of an axis (81),
and a sensor (21) to detect a position of the mobile cam (8);
the smart monocontrol cartridge (1) further comprises a magnet (6);
the magnet (6) being arranged in the casing (4) or in the mobile body (5) and the sensor (21) being arranged in the mobile cam (8); or the sensor (21) being arranged in the casing or in the mobile body (5) and the magnet (6) being arranged in the mobile cam (8),
the sensor (21) being arranged to sense the magnetic field generated by the magnet (6) so that a modification of an inclination of the cam (8) can be determined based on a variation of the magnetic field sensed by the sensor (21).

## Description

The present invention relates to a smart monocontrol cartridge for taps.

There are known several configurations of cartridges capable to measure the temperature of a fluid and/or liquids, for example water. In the state of the art, there are different individual control taps used in sinks, bath tubs, showers and similar. These taps generally include an accessory commonly referred to as a cartridge, designed to mix the water flowing from hot and/or cold water inlets, which are coupled to a chamber or mixing base of the cartridge in a way that the mixed water is released at the desired temperature. In order to determine the temperature of the mixed water and show a type of warning or information that the temperature of the mixed water corresponds to that of scalding, cartridges can include a temperature indicator operatively coupled to a temperature measurement circuit.

The present invention discloses a smart monocontrol cartridge with tilting means to open/close the passage of a fluid, and preferably with rotating means to select the temperature of the fluid. The fluid is preferably water but the present invention can be applied to other kind of fluids. The present invention discloses means to control the position of said cartridge. The control of the tilting position allows knowing the open/close position of the cartridge. The present invention also discloses means for knowing directly and/or indirectly the temperature of the water. This is especially useful to control health diseases like legionellosis, which tends to appear in still water at thermal conditions that are common in taps and showers.

More concretely, the smart monocontrol cartridge measures the tilting and/or rotational position of the cartridge by using a magnetic field generated by a magnet and sensed by a sensor. Optionally, the determination of the angular rotational position of the cartridge of the tap makes possible to also obtain an indirect determination of the water's temperature.

In particular, the present invention discloses a smart monocontrol cartridge for taps comprising a casing which houses therein:
a channel for a fluid,
a mobile body which comprises a cavity in which a mobile cam is located,
the mobile cam being coupled by rotatable means to the mobile body by means of an axis,
and a sensor, preferably a magnetic sensor, to detect a position of the mobile cam, with the particular feature that the smart monocontrol cartridge further comprises a magnet, the magnet being arranged in the casing or in the mobile body and the sensor being arranged in the mobile cam or the sensor being arranged in the casing or in the mobile body and the magnet being arranged in the mobile cam, the sensor being arranged to sense the magnetic field generated by the magnet so that a modification of the inclination of the cam can be determined based on the variation of the magnetic field sensed by the sensor.

The present invention solves the problem of knowing the position of the tap by using a magnetic field. When the present invention is incorporated in a tap, it provides the ability to know when said tap is open or closed, and the angular position (tilt and/or rotation) of said tap.

An advantage of the present invention is that it does not require any external electrical connection, and it is minimally invasive, even at its simplest embodiment. Preferably, it can comprise a battery. Alternatively, it can comprise any external electrical connection.

In a preferred embodiment, one of the sensor or the magnet is placed in a cavity in the interior of a detachable sensor module. Preferably, the detachable sensor module is placed in a recess of the mobile cam. More preferably, the recess of the mobile cam comprises guides to facilitate the placing of the detachable sensor module.

In a preferred embodiment, one of the sensor or magnet is arranged in the mobile body. Preferably, the magnet is placed in a recess of the mobile body.

Preferably, the magnetic sensor is a Hall Effect sensor. More preferably, the magnet is a bipolar magnet. Alternatively, the magnet is a sinusoidal magnet.

In a preferred embodiment, the cartridge comprises an electronic module configured to house fluid temperature detection means configured to detect the temperature in a channel for a fluid. Preferably, the smart monocontrol cartridge comprises a flexible cable connecting the electronic module and the detachable sensor module. More preferably, the fluid temperature detection means is a temperature sensor located next to a wall of a channel for a fluid and not into direct contact with the fluid.

In a preferred embodiment, the detachable sensor module includes a contact circuit prepared to have contact with a display. Preferably, the contact circuit has four contact points.

Preferably, the mobile cam has a recess adapted to place a gasket therein for fixating an external handle of a monocontrol tap.

The present invention also discloses a sensor device for a smart monocontrol cartridge with the particular feature that it comprises a sensor arranged to sense the magnetic field generated by a magnet and means for placing the sensor in the mobile cam or means for placing the sensor in the casing or body.

Preferably, the sensor device also comprises a detachable sensor module, an electronic module and a cable connecting said detachable sensor module and said electronic module. More preferably, it also comprises fluid temperature detection means.

The present invention also discloses the use of a sensor device to control the tilt and/or rotation position of a smart monocontrol cartridge.

For a better understanding, some drawings of two embodiments of a smart monocontrol cartridge according to the present invention are attached by way of explanatory but not restrictive example.
Figure 1 is a perspective view of a smart monocontrol cartridge according to a first embodiment of the present invention.
Figure 2 is a perspective view of the cartridge shown in Figure 1 wherein a partial cross section has been made in the mobile cam in order to show the position of the detachable sensor module therein.
Figure 3 is an elevation view of a cross section of the cartridge without the detachable sensor module.
Figure 4 is a perspective view of a sensor device according to the first embodiment of the present invention.
Figure 5 is a perspective view of the detachable sensor module of the first embodiment of the present invention.
Figure 6 is a perspective view of the detachable sensor module of the first embodiment of the present invention wherein a partial cross section has been made in order to show the position of the sensor therein.
Figure 7 is a perspective view of a cross section of the detachable sensor module of figure 6.
Figure 8 is a perspective view of a smart monocontrol cartridge according to a second embodiment of the present invention.
Figure 9 is an example of collocation of the detachable sensor module into the mobile cam of a smart monocontrol cartridge according to the second embodiment of the present invention.
Figure 10 is a perspective view of the sensor device and the detachable sensor module of the second embodiment of the present invention.
Figure 11 is a perspective view of the sensor device and the detachable sensor module of the second embodiment of the present invention wherein a partial cross section has been made in order to show the position of the sensor therein.

The following detailed description present a number of specific details by way of example to provide a detailed understanding of the relevant teachings of this invention. However, it is clear for a person skilled in the art that the present teachings can be carried out without these details.

An objective of the invention detailed in the present application is to measure and control the position of the monocontrol cartridge. Further objectives of the invention are to determine if the monocontrol cartridge is in open position, in closed position, and its angular position. Another objective of the present invention is to present a solution to measure and control the position of a monocontrol cartridge applicable in known monocontrol cartridges. The solution presented in this application can be manufactured using the same moulds usually used for manufacturing known monocontrol cartridges with little economic charge.

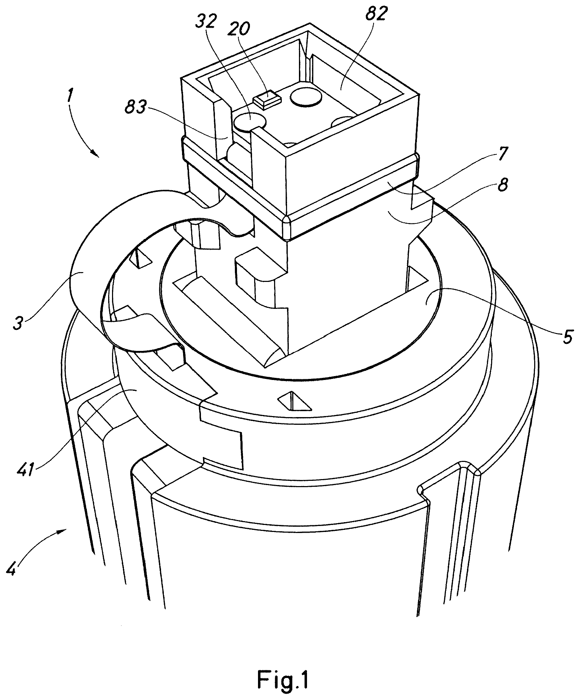

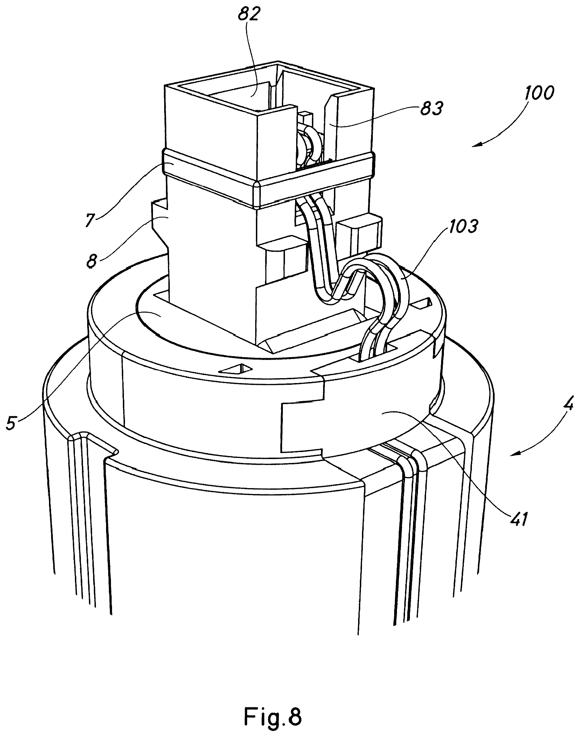

In particular, the present description discloses two embodiments, which may be understood as a reference, as well as non-limiting examples. Figures 1 to 7 show a first embodiment of the invention which comprises fluid temperature detection means. Figures 8 to 11 show a second embodiment of the invention, without fluid temperature detection means. Thus, the second embodiment can be manufactured at a lower price than the first embodiment.

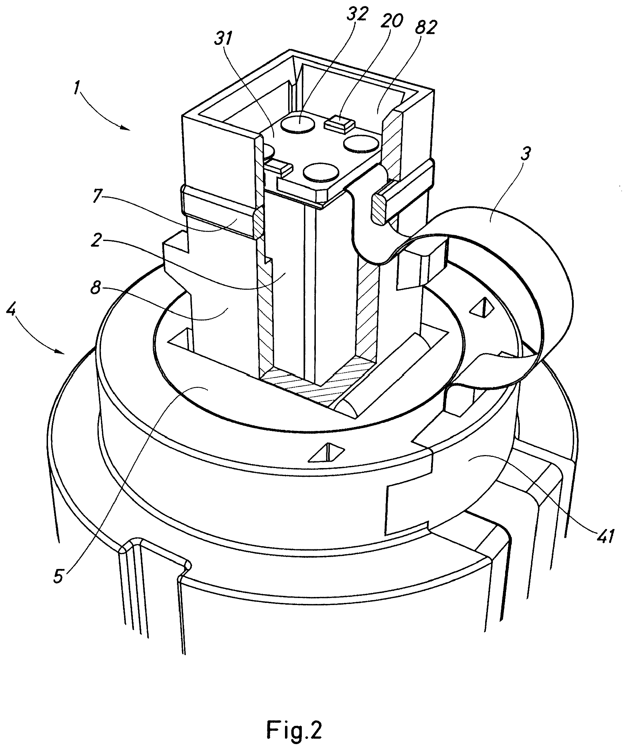

Figures 1 and 2 show a smart monocontrol cartridge -1- for taps according to said first embodiment of the invention which comprises a casing -4- which houses therein a channel for a fluid (not shown).

The casing -4- is an essentially hollow, cylindrical body which can be used for smart monocontrol cartridges -1- of any known type. The casing -4- comprises channels for fluid therein which are outputs for the fluid that flows through the cartridge -1-. In this embodiment, said channels for fluid are liquid channels, more particularly water channels. Usually, smart monocontrol cartridges include at least one water channel for hot water and one for cold water, which are then mixed inside of the cartridge. Additionally, cartridges can include an additional water channel for mixed water. The casing -4- may also include a pair of ceramic discs and a mobile cap. Channels for water, ceramic discs and mobile caps are widely known in the state of the art, and those used in the present invention may correspond to standard channels, discs and caps, being not relevant for the disclosure of this invention.

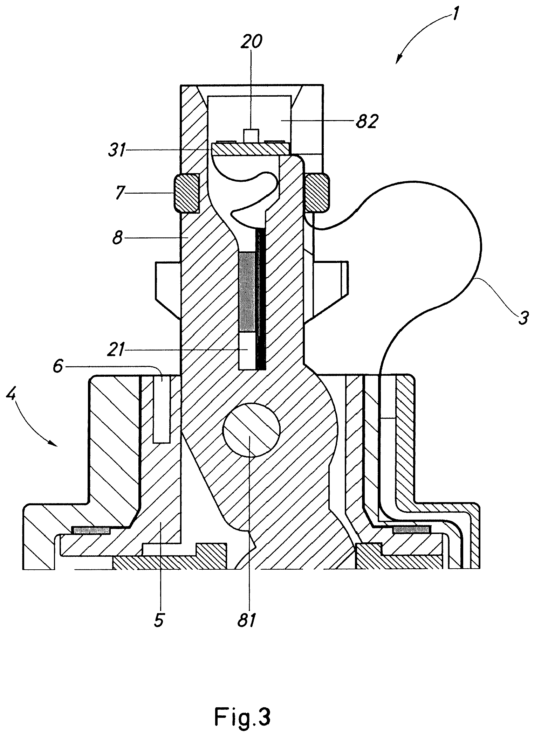

The casing -4- also houses therein a mobile body -5- which comprises a cavity in which a mobile cam -8-is located and configured to move with respect of the casing -4-. The mobile cam -8- is coupled by rotatable means to the mobile body -5- by means of an axis -81- (shown in Figure 3) or pins that pass through said mobile cam -8- through a hole, so that the mobile body -5- moves in unison with said mobile cam -8-. In some embodiments, the mobile body -5- moves can rotate around its central axis when the mobile cam -8- is actuated by, for example, a tap handle of a monocontrol tap. The axis -81- can be further fastened in holes arranged in the mobile body -5-. Additionally, the mobile body -5- can have a recess (not shown) configured so that a portion of the cable -3- is housed partially therein. Thus, the cable -3- can be completely contained within the measurements of a standard monocontrol cartridge so it can be used in any common monocontrol tap on the market.

The mobile cam -8- is rotatably fixed to the mobile body - by means of an axis -81-. Therefore, the mobile cam -8- can rotate around the central axis of the mobile body -5- alongside said mobile body -5- and can also tilt around the axis -81-.

Figure 2 shows that the cartridge -1- also comprises a detachable sensor module -2- which is housed in a recess -82- of the mobile cam -8-. The detachable sensor module -2- is a generally quadrangular-shaped module connected by a cable -3- that has a cavity -22- in its interior where a sensor -21- or a magnet -6- can be placed.

As shown in Figure 2, the detachable sensor module -2- comprises two tabs-20- which can be used to fix a contact circuit -31- to the detachable sensor module -2-. In any case, the detachable sensor module -2-is preferably glued to the cavity -82-.

The cable -3- is a flexible cable -3- arranged in a recess -83- of the mobile cam -8- and can move according to the movement of the mobile cam -8-.

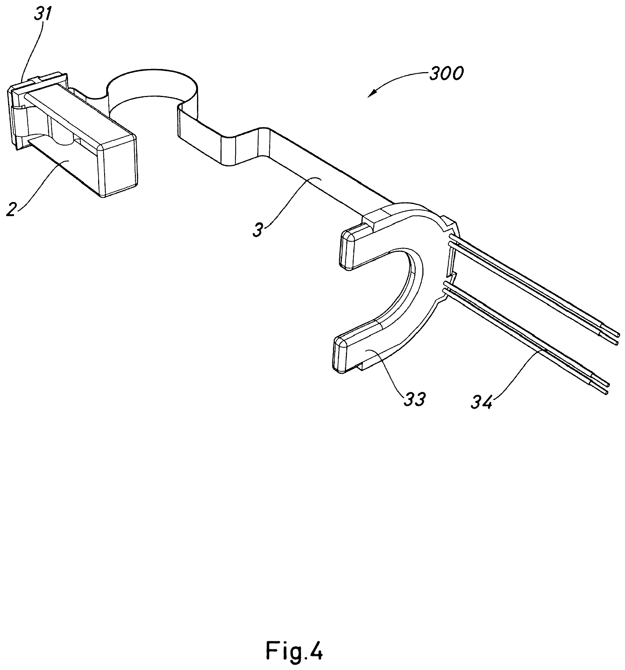

The flexible cable -3- is introduced into a cavity -22- in the interior of the detachable sensor module -2-from one of the sides of the upper part of the detachable sensor module -2-. The flexible cable -3- is also connected to an electronic module -33- (shown in Figure 4) or by the supply means from the other side of the upper part of the detachable sensor module -2-.

The casing -4- also includes a casing cover element -41- for housing a section of the flexible cable -3- so that the cable -3- is partially covered and protected by the casing cover element -41-.

Additionally, a gasket -7- is arranged in a recess -84- of the mobile cam -8-. The gasket helps to fixate a handle for the tap onto the mobile cam -8-. The handle of the tap is not shown in the figures. It may be understood as any known handle for taps and is not an object of protection of this application.

The solution provided in this invention enables the measurement of the angular tilting position of the mobile cam -8- using the detection of a magnetic field. To this end, the smart monocontrol cartridge -1-comprises a magnet -6- and a sensor -21- (both shown in Figure 3). One of said sensor -21- or magnet -6- is placed in the casing -4- or mobile body -5- of the cartridge -1- and the other of said sensor -21- or magnet -6- is placed in the mobile cam -8-, preferably in the interior of the detachable sensor module -2-, which is placed in a recess -82- of the mobile cam -8-. The sensor -21- or magnet -6- placed in the casing -4- or mobile body -5- can be housed, assembled, glued, placed and/or fixed by any other means into said casing -4- or mobile body -5-. Figure 3 shows the magnet -6- arranged in a recess of the mobile body -5- and the sensor -21- arranged in the mobile cam -8-.

The sensor -21- is arranged to sense the magnetic field generated by the magnet -6-. When the mobile cam -8- is tilted, the sensor -21- is also tilted, while the magnet -6- remains in its position. A modification of the tilt of the cam -8- produces a variation in the distance between the magnet -6- and the sensor -21-, producing in turn a variation on the magnetic field sensed by the sensor -21-. The angular tilting position is determined based on the variation of the magnetic field sensed by the sensor -21-.

In this invention, the sensor -21- can be a Hall Effect sensor that measures the magnitude of the magnetic field of the magnet -6-, and is used to detect the position of the magnet -6-. The sensor directly returns a voltage, which is directly proportional to the sensed magnetic field strength. When the magnetic field generated by the magnet -6- is known, the distance from said magnet -6- to the Hall Effect sensor -21-, and thus the distance between the mobile cam -8- and the mobile body -5-, can be determined. Furthermore, when the distance between the mobile cam -8- and the mobile body -5- is known, the angular tilting position of the mobile cam -8- can be determined, and thus the angular tilting position of the tap, determining as well its position open/closed. The tilting of the mobile cam -8- with respect to the mobile body -5- can be determined in any point of its angular path.

Additionally, and due to the sensor, the tap can be programmed to be activated or deactivated at a certain angular tilting position. When combined with water temperature detection means, it can be reliably determined if the water had thermal characteristics which would allow the proliferation of health diseases like legionellosis, closing the tap accordingly. Furthermore, a timer can be added.

Alternatively, other kind of sensors, like a reed switch sensor, and other kind of magnets, like sinusoidal magnets or electromagnets, can be used.

When the mobile cam -8- comprising the sensor -21- rotates, the mobile body -5- which comprises the magnet -6- rotates at the same rate, thus maintaining the magnet -6- and the sensor -21- the same relative position during the entire rotation. Thus the device is able to fully calculate the tilt around the axis -81- of the mobile cam -8- with respect of the mobile body -5- irrespective of the degree of rotation. Alternatively, the sensor -21- can be placed in the recess of the mobile body -5- and the magnet -6- can be located in the mobile cam -8-.

In a different configuration, the magnet -6- or the sensor -21- can be located in the casing -4- instead of being in the mobile body -5-, while the other of the magnet -6- or sensor -21- is located in the mobile cam -8-. In that configuration, when the mobile cam rotates -8-, the element in the casing would not rotate at the same rate. This way, the device can sense changes both in tilt and rotation.

Figure 3 shows a configuration of the invention in which one of the sensor -21- or magnet -6- is placed inside of the recess -82- without the detachable sensor module -2-.

Figure 4 shows that the cartridge -1- comprises an electronic module -33- configured to house water temperature detection means configured to detect the temperature in a water channel. The water temperature detection means are arranged to detect the temperature of the water resultant of the combination of hot, cold and/or mixed water provided by their correspondent water channels after selecting the desired water temperature through the angular position of the mobile cam -8-. The electronic module -33- of this embodiment is essentially U-shaped, and is connected to the detachable sensor module -2- by a cable -3-. In this embodiment, the electronic module -33- comprises an inner cavity (not shown) configured to house electronic control means (not shown) and a temperature sensor, which is more preferably a thermistor, a RTD sensor, a thermocouple, or combinations thereof. The electronic module -33- is arranged in the casing -4- to be as close as possible to the channels of water to be able to detect the temperature generated by the combination of said water channels desired by the user when rotating the mobile cam -8-.

Said water temperature detection means can be located at a minimum distance from the wall of the resultant water channel and not into direct contact with the water, thus eliminating the possibility of leaks or breaks in the electronic module -33-. In this way, an indirect measure of the temperature of the resultant water in the channel is produced outside of said channel.

The water temperature detection means are electrically connected and in data communication with electronic control means. Said electronic control means may comprise analogue-digital conversion means and processing means configured to calculate a water temperature based on the measurement of the water temperature detection means and compare said calculated temperature to a pre-set reference temperature, and communication means to transmit said calculated temperature. Thus, when the smart monocontrol cartridge -1- forms part of a smart tap, it is possible to send data through the communication means to interface elements or periphericals for the user to retrieve the information. Preferably, those water detection means and the electronic means are encapsulated in a thermosetting resin that in a cured state generates an adhering surface, which guarantees the durability of said electronic components, and also preventing water or humidity to enter said electronic means.

Figure 4 shows a sensor device -300- comprising the detachable sensor module -2-, the electronic module -33-, the flat and flexible cable -3- coupled to them and additional supply cables -34-. The sensor device -300- can be removed and introduced into the recess -82- of the mobile cam -8- by placing the detachable sensor module -2- into said recess -82- and the flexible cable -3- in the recess -83-. This set -300- is adapted to work with any known smart monocontrol cartridge -1- and is further adapted to be sold and manufactured separately.

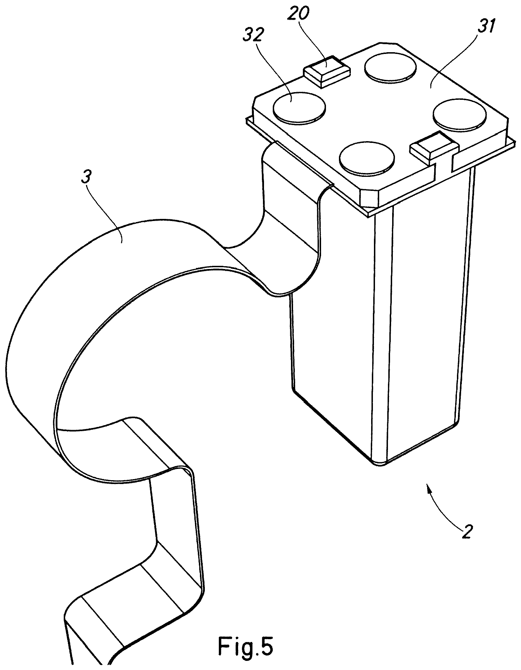

As shown in Figure 5, the detachable sensor module -2- comprises a contact circuit -31- in its upper end prepared to have contact with a display (e.g. a screen on the tap handle) to show the data collected (on/off position, water temperature, time the tap has been opened/closed...). The contact circuit -31-comprises a pin commonly known as pogo pin, which is a device used to establish a connection between two circuit boards. The pogo pin is usually a receptacle containing a sharp, spring-loaded pin. Pressed between two electronic circuits, the sharp points at each end of the pogo pin make secure contacts with the two circuits and thereby connect them together. Although usually used as a generic name, Pogo is a registered trademark. Alternatively, similar contact circuits can be used.

The contact circuit -31- shown in the figures comprises four contact points -32- to make contact with a display. The four contact points -32- comprise communication and supply signals. The contact circuit -31-makes contact by its lower part with the flexible cable -3-. Alternatively, the contact circuit -31- can be power-supplied by a battery connected between said contact circuit -31- and the display.

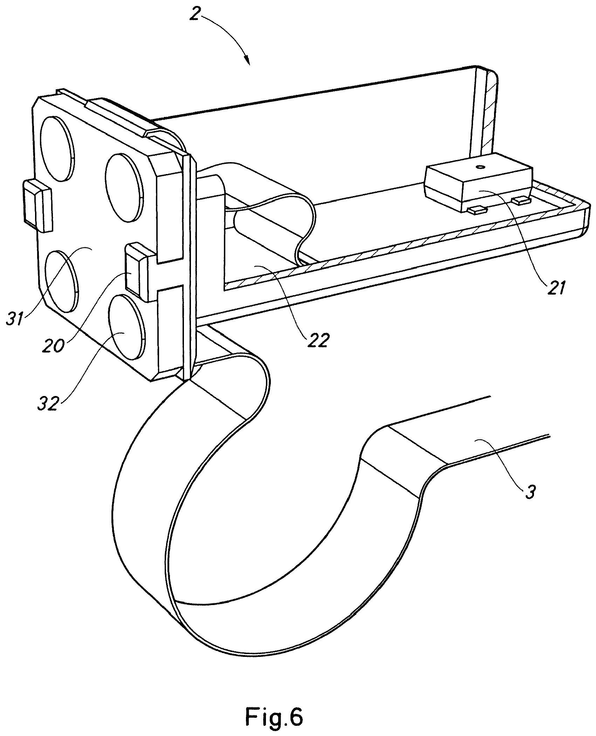

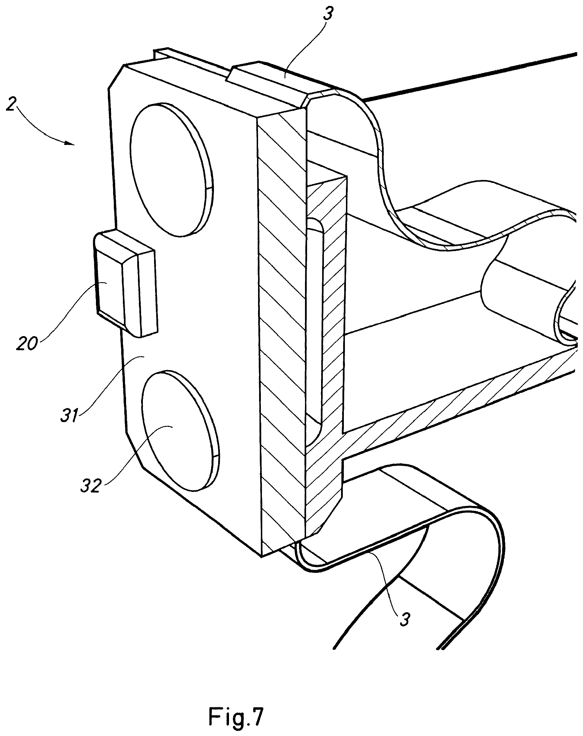

Figure 6 shows the arrangement of the sensor -21- into the cavity -22- in the interior of the detachable sensor module -2-. The sensor -21- can be enclosed inside of a protective box. Additionally, the contact circuit -31- can be glued to the detachable sensor module -2- through a small hole located in the detachable sensor module -2-, which can be seen in Figure 7. Alternatively, other fixing methods can be used.

The smart monocontrol cartridge -1- may comprise a handle to facilitate its manoeuvrability. Usually, tap handles comprise coupling elements configured to couple them to the upper end of a cam to transmit the movement of the tap handle towards said cam. The movement of the tap handle corresponds to the normal actions to open, close and regulate the temperature of mixed water. Said handle may comprise an interface element or can be connected to a display (which can be LEDs, LED displays, LCDs or similar, depending on the data selected to be shown), which can be connected to the contact circuit -31-located in the upper part of the detachable sensor module -2-, which is also connected to the flexible cable -3-. As such, an electrical and data connection is established through the flexible cable -3- between the electronic module -34- and said contact circuit -31-, connected to said interface element or display.

Figures 8 to 11 show a second embodiment of the present invention. In this second embodiment, elements similar to elements shown in the first embodiment have been designated with the same or similar reference signs. The solution provided in this second embodiment also enables the measurement of the angular tilting position of the mobile cam using the detection of a magnetic field. The smart monocontrol cartridge -100- also comprises a magnet -6- and a sensor -21- placed like in the first embodiment and with similar features and functionality. However, in this second embodiment the smart monocontrol cartridge -100- does not comprise water temperature detection means. Thus, it does not comprise either the contact circuit, the electronic module and the flexible cables otherwise present in the first embodiment are not needed. This second embodiment has the advantage of being cheaper and easier to manufacture than the first embodiment.

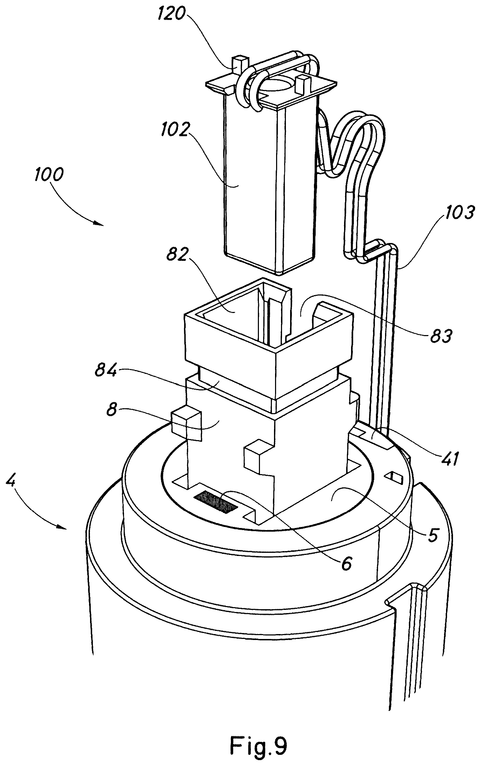

Figures 8 and 9 show a smart monocontrol cartridge -100- for taps. Like the first embodiment, the casing -4- also houses therein a mobile body -5- which comprises a cavity in which a mobile cam -8- is located and configured to move with respect of the casing -4-. The mobile cam -8- is coupled by rotatable means to the mobile body -5- by means of an axis -81- or pins that pass through said mobile cam -8- through a hole, so that the mobile body -5- moves solidarilly with said mobile cam -8-. In some embodiments, the mobile body -5- moves can rotate around the central axis when the mobile cam -8- is actuated by, for example, a tap handle of a monocontrol tap. The axis -81- can be further fastened in holes arranged in the mobile body -5-. Additionally, the mobile body -5- can have a recess (not shown) configured so that a portion of the cable -103- is housed partially therein. Thus, the cable -103- can completely contained within the measurements of a standard monocontrol cartridge so it can be used in any common monocontrol tap on the market.

Figure 9 shows that the cartridge -100- also comprises a detachable sensor module -102- which is arranged into a recess -82- of the mobile cam -8-. The detachable sensor module -102-- can be housed, assembled, glued, placed and/or fixed by any other means into said recess -82-. The detachable sensor module -102- is of a generally quadrangular-shape. The detachable sensor module -102- is supplied by a cable -103- and has a cavity -122- in its interior where a sensor -21- or a magnet -6- can be placed. Additionally, a gasket -7- is arranged in a recess -84- of the mobile cam -8-.

The casing -4- also includes a casing cover element -41- to house a partial section of a flexible cable -103- so that the partial section of the cable -103- is covered and protected by the casing cover element -41-.

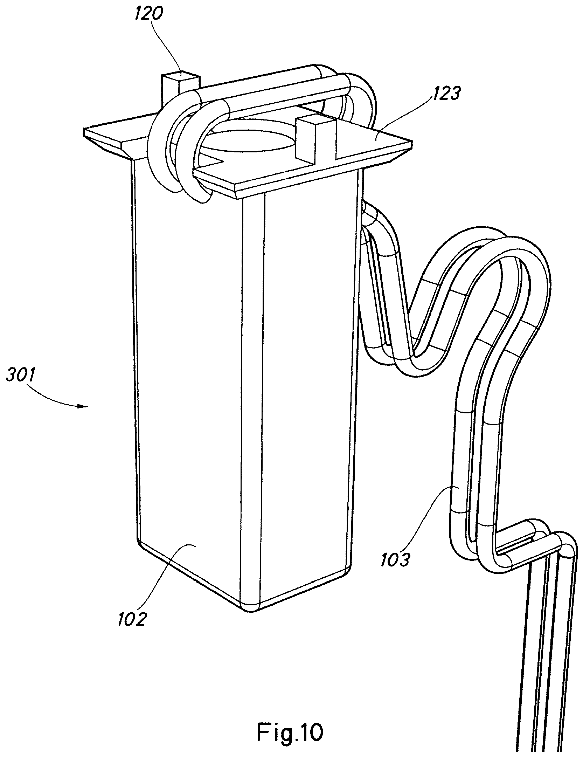

Figure 10 shows a sensor device -301- comprising the detachable sensor module -102- and the cable -103- coupled to it can be removed and introduced to the recess -82- of the mobile cam -8- by placing the detachable sensor module -102- into said recess -82- and the cable -103- in the recess -83-. As shown in said Figure 10, the detachable sensor module -102- does not comprise any contact circuit. This sensor device -301- is adapted to work with any known smart monocontrol cartridge -100- and is further adapted to be sold and manufactured separately.

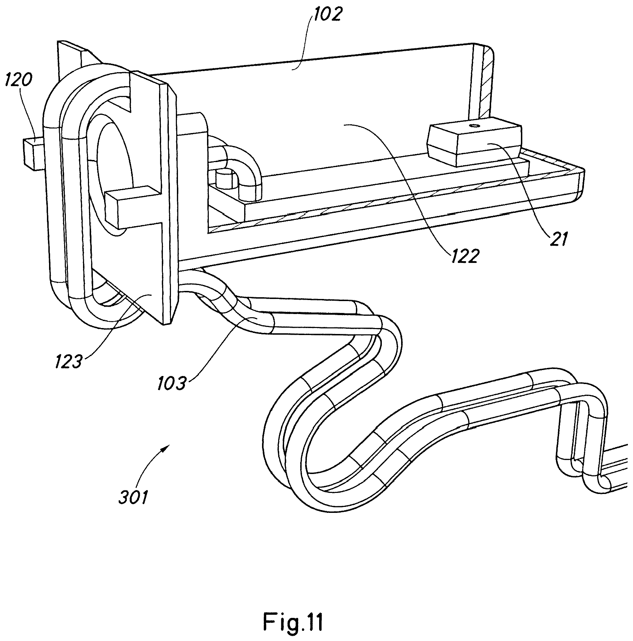

Figure 11 shows the arrangement of the sensor -21- into the cavity -22- in the interior of the detachable sensor module -102-.

The solution provided in this invention enables the measurement of the angular tilting position of the mobile cam -8- using a magnetic field. If the angular tilting position of the mobile cam -8- is known, the exact temperature of the resultant water that flows through the cartridge -100- and exits the tap can also be determined. The determination of the inclination is analogue to the first embodiment. Electrical parts are kept to a minimum and can be ridded off all together.

Although the invention has been presented and described with reference to embodiments thereof, it should be understood that these are not restrictive of the invention, and therefore multiple structural or other details may vary, as may be obvious to experts in the sector after interpreting the subject matter disclosed in the present description, claims and drawings. Therefore, all variants and equivalents will be included within the scope of the present invention if they can be considered to fall within the broadest scope of the following claims.

## Claims

1. Smart monocontrol cartridge for taps comprising:
a casing which houses therein:
a channel for a fluid,
a mobile body which comprises a cavity in which a mobile cam is located,
the mobile cam being coupled by rotatable means to the mobile body by means of an axis,
and a sensor to detect a position of the mobile cam;
**characterised in that** the smart monocontrol cartridge further comprises a magnet;
the magnet being arranged in the casing or in the mobile body and the sensor being arranged in the mobile cam; or the sensor being arranged in the casing or in the mobile body and the magnet being arranged in the mobile cam,
the sensor being arranged to sense the magnetic field generated by the magnet so that a modification of an inclination of the cam can be determined based on a variation of the magnetic field sensed by the sensor.

2. Smart monocontrol cartridge for taps according to any of the previous claims, **characterised in that** one of the sensor or the magnet is placed in a cavity in the interior of a detachable sensor module.

3. Smart monocontrol cartridge for taps according to any of the previous claims, **characterised in that** the detachable sensor module is placed in a recess of the mobile cam.

4. Smart monocontrol cartridge for taps according to any of the previous claims, **characterised in that** one of said sensor or said magnet is arranged in the mobile body.

5. Smart monocontrol cartridge for taps according to the previous claim, **characterised in that** the magnet is placed in a recess of the mobile body.

6. Smart monocontrol cartridge for taps according to any of the previous claims, **characterised in that** the sensor is a Hall Effect sensor.

7. Smart monocontrol cartridge for taps according to any of the previous claims, **characterised in that** the cartridge further comprises an electronic module configured to house fluid temperature detection means configured to detect the temperature in a channel for a fluid.

8. Smart monocontrol cartridge for taps according to any of claims 2 to 7, **characterised in that** comprises a flexible cable connecting the electronic module and the detachable sensor module.

9. Smart monocontrol cartridge for taps according to claims 7 or 8, **characterised in that** the water temperature detection means is a temperature sensor located next to a wall of a channel for a fluid and not into direct contact with the fluid.

10. Smart monocontrol cartridge for taps according to any of claims 2 to 9, **characterised in** the detachable sensor module includes an upper contact circuit prepared to have contact with a display.

11. Smart monocontrol cartridge for taps according to any of the previous claims, **characterised in that** the mobile cam has a recess adapted to place a gasket therein for fixating an external handle of a monocontrol tap.

12. A sensor device for a smart monocontrol cartridge according to any of the previous claims, **characterised in that** it comprises a sensor arranged to sense the magnetic field generated by a magnet and means for placing the sensor in the mobile cam or means for placing the sensor in the casing or body.

13. Sensor device according to claim 12, **characterised in that** it also comprises a detachable sensor module, an electronic module and a cable connecting said detachable sensor module and said electronic module.

14. Sensor device according to any of claims 12 or 13, **characterised in that** it also comprises fluid temperature detection means.

15. Use of a sensor device according to any of claims 12 to 14 to control the tilt and/or rotation position of a smart monocontrol cartridge.

## Amended claims

### Amended claims in accordance with Rule 137(2) EPC.

1. Smart monocontrol cartridge (1) for taps comprising:
a casing (4) which houses therein:
a channel for a fluid,
a mobile body (5) which comprises a cavity in which a mobile cam (8) is located,
the mobile cam (8) being coupled by rotatable means to the mobile body (5) by means of an axis (81),
and a sensor (21) to detect a position of the mobile cam (8);
the smart monocontrol cartridge (1) further comprising a magnet (6);
the sensor (21) being arranged to sense the magnetic field generated by the magnet (6) so that a modification of an inclination of the cam (8) can be determined based on a variation of the magnetic field sensed by the sensor (21).
**characterised in that** the magnet (6) is arranged in the casing (4) or in the mobile body (5) and the sensor (21) is arranged in the mobile cam (8); or the sensor (21) is arranged in the casing (4) or in the mobile body (5) and the magnet (6) is arranged in the mobile cam (8),

2. Smart monocontrol cartridge (1) for taps according to any of the previous claims, **characterised in that** one of the sensor (21) or the magnet (6) is placed in a cavity in the interior of a detachable sensor module (2).

3. Smart monocontrol cartridge (1) for taps according to any of the previous claims, **characterised in that** the detachable sensor module (2) is placed in a recess of the mobile cam (8).

4. Smart monocontrol cartridge (1) for taps according to any of the previous claims, **characterised in that** one of said sensor (21) or said magnet (6) is arranged in the mobile body (5).

5. Smart monocontrol cartridge (1) for taps according to the previous claim, **characterised in that** the magnet (6) is placed in a recess of the mobile body (5).

6. Smart monocontrol cartridge (1) for taps according to any of the previous claims, **characterised in that** the sensor (21) is a Hall Effect sensor.

7. Smart monocontrol cartridge (1) for taps according to any of the previous claims, **characterised in that** the cartridge further comprises an electronic module (33) configured to house fluid temperature detection means configured to detect the temperature in the channel for a fluid.

8. Smart monocontrol cartridge (1) for taps according to any of claims 2 to 7, **characterised in that** comprises a flexible cable connecting the electronic module (33) and the detachable sensor module (2).

9. Smart monocontrol cartridge (1) for taps according to claim 7, **characterised in that** the water temperature detection means is a temperature sensor located next to a wall of a channel for a fluid and not into direct contact with the fluid.

10. Smart monocontrol cartridge (1) for taps according to claim 2 or any of claims 3 to 9 in combination with claim 2, **characterised in that** the detachable sensor module (2) includes an upper contact circuit prepared to have contact with a display.

11. Smart monocontrol cartridge (1) for taps according to any of the previous claims, **characterised in that** the mobile cam (8) has a recess adapted to place a gasket therein for fixating an external handle of a monocontrol tap.
